# EUROPEAN PATENT SPECIFICATION

(11) **EP 2 111 975 B1**
(45) Date of publication and mention of the grant of the patent: **20.07.2016**
(21) Application number: 09158629.7
(22) Date of filing: 23.04.2009
(51) Int. Cl.: B32B 7/00, B32B 15/00, B32B 18/00, B23K 1/00, C04B 37/00, C04B 37/02

(54) **JOINED COMPOSITE STRUCTURES WITH A GRADED COEFFICIENT OF THERMAL EXPANSION FOR EXTREME ENVIRONMENT APPLICATIONS**
VERBUNDENE VERBUNDSTRUKTUREN MIT EINER ABGESTUFTEN WÄRMEAUSDEHNUNGSKOEFFIZIENT FÜR EXTREMUMGEBUNGSANWENDUNGEN
STRUCTURES COMPOSITES ASSEMBLÉES AVEC UN COEFFICIENT GRADUÉ D'EXPANSION THERMIQUE POUR LES APPLICATIONS EN ENVIRONNEMENT EXTRÊME

(30) Priority: 23.04.2008 US 108480
(43) Date of publication of application: 28.10.2009
(73) Proprietor: The Boeing Company, Chicago, IL 60606-1596 (US)
(72) Inventor: Yousefiani, Ali, Arcadia, CA 91006 (US); Comfort, John M., Corona, CA 92882 (US); Vollmer, John G., Limita, CA 90717 (US); Hand, Michael L., Huntington Beach, CA 92649 (US)
(74) Representative: Howson, Richard G.B.

(56) References cited:
- EP-A1- 0 459 865
- EP-A2- 0 109 814
- GB-A- 1 509 644
- US-A- 5 881 607

## Description

### BACKGROUND

### Field

Embodiments of the disclosure relate generally to the field of structures for interattachment of materials and components with significantly differing coefficients of thermal expansion (CTE) and more particularly to a composite structure with constituents having a graduated CTE for connection of two structures with vastly different CTE and a method for creation of the graded CTE composite structure.

### Description of the Related Art

The need for higher capability, weight efficient, and long lasting extreme environment structures has necessitated the use of higher capability advanced extreme environment materials (e.g. without limitation, ceramic matrix composites, carbon-carbon composites, refractory metals/alloyslintermetallics, cermets, and intermetallic compounds). Such advanced materials possess vastly different CTEs compared to common structural alloys. Additionally, they may be less ductile. Incorporation of such advanced materials into the design of an extreme environment structure inevitably may require them to be attached, at some point, to common structural alloys with much higher CTE and ductility. When exposed to the intended extreme environments, significantly high thermal stresses and strains may be developed, which may lead to undesirable results. This has been an issue, which has either completely restricted the use of these advanced structural materials or has resulted in costs skyrocketing, whether it be for weight penalties or increase in complexity of designs to allow for attachment to available structural alloys. Attaching members with dramatically different CTEs for use in high and low temperature applications is an extremely challenging task. Existing solutions (which are usually not feasible if members have dramatically different CTEs) mainly involve complicated mechanical fastening devices, which are designed to allow relative movement between members with different CTEs when the assembly is heated or cooled. This may result in complex connections. Existing solutions tend to be non-rigid due to the fact that they may be inherently flexible to allow relative movement and they may have features that are not optimal for use in typical high temperature applications, such as engines, turbines, and vehicle leading edges.

It is therefore desirable to provide a structure that can be used to attach members with vastly different CTE to produce an assembly that can be heated or cooled without introducing significant thermal stresses or strains.

It is further desirable to provide a system that does not rely on complicated mechanisms and complex designs to allow relative deformation during heating or cooling, allowing for a substantially rigid solution tailored to inherently accommodate for the wide CTE mismatch encountered in extreme environment applications such as engines, turbines and vehicle leading edge subsystems.

EP0109814 discloses joining silicon nitride to metals. A surface of the silicon nitride is bonded to a layer of aluminium oxide or an aluminium silicon compound or magnesia or magnesium oxide or mullite, then bonding that first layer to a layer of nickel alumina before joining the nickel alumina to the metal or metal alloy by a conventional brazing or welding process.

GB1509644 discloses multi-layer glass. A laminated body made of glass, glass ceramics or glass and glass ceramics is provided. A thick core portion with a high thermal coefficient of expansion and thinner layer with a lower thermal coefficient of expansion compared with the thicker core portion, the thinner layer completely enveloping the core portion to which it adhere intimately, a transition zone with a graduated concentration of glass components being formed between the layer with the low thermal coefficient of expansion and the layer with a high thermal coefficient of expansion perpendicularly to the surface of the laminated body.

EP0459865 discloses a method of protecting ceramic surfaces. A method of bonding a ductile oxidation resistant metal layer to a ceramic surface to enhance the resistance of the ceramic to surface damage by thermal, mechanical or chemical means. This is accomplished by taking advantage of the chemical reactivity of certain metals with the ceramic and by grading thermal expansion coefficients of these various metals so as to form intermediate layers of a multi-layer composite. The intermediate layers are metallurgically compatible with each other and an outer metal layer is chosen for its oxidation and corrosion resistance for an anticipated environment.

US 5881607 discloses a ceramic-metal composite assembly. The ceramic-metal composite assembly includes an intermediate member made of a material having a thermal expansion efficiency between those of the materials forming a ceramic member and a metallic shaft member. The intermediate member is metallurgically joined to the ceramic member while being mechanically joined to the metallic member to constitute a single unit.

### SUMMARY

A graded coefficient of thermal expansion (CTE) interface is provided by a composite structure having a first end for attachment to a structural component with a first CTE and a second end for attachment to a second structural component with a second CTE. Joining processes are employed to create a layered composite billet or near net shape with a graded CTE. The CTE-graded layered composite billet or near net shape is provided in a first embodiment by welding, in a second embodiment by brazing, and in a third embodiment by solid state joining. The resulting CTE-graded layered composite is then processed to produce a first surface for attachment of the first structural member having a first CTE and to produce a second surface for attachment of the second structural member having a second CTE. The resulting assembly provides capability for attaching structural members with vastly different CTE to produce an assembly that can be heated or cooled without -2A-introducing significant thermal stresses or strains. Additionally, the assembly does not rely on complicated mechanisms and complex designs to allow relative movement during heating or cooling, allowing for a substantially rigid solution tailored to inherently accommodate for the wide CTE mismatch.

A method for producing a graded coefficient of thermal expansion (CTE) interface includes providing a first attachment layer having a surface for attachment to a first structural component with a first CTE and a second attachment layer having a second surface for attachment to a second structural component with a second CTE. Joining processes are employed to create the layered composite billet or near net shape with a graded CTE. The CTE-graded layered composite billet or near net shape is provided in a first embodiment by welding, in a second embodiment by brazing, and in a third embodiment by solid state joining.

In one embodiment, there is provided a graded coefficient of thermal expansion (CTE) interface comprising:
a composite structure having
a first end for attachment to a structural component with a first CTE and a second end for attachment to a second structural component with a second CTE,
a plurality of layers intermediate the first and second ends, each having a predetermined CTE, and
joints intermediate adjacent layers in the plurality of layers.

The joints comprise wide CTE-graded stir blended weldments, and further wherein the joints are forged together by applying a spinning pin-tool and shoulder against the materials being joined.

Optionally, each weldment incorporates a first land on a first of the layers and a mating land on a second layer adjacent the first layer and the smart melt blended weld provides graduated weld elements across the joint having varying CTE properties across the first and mating lands.

Optionally, the thickness of the first and mating lands is predetermined to produce the varying CTE properties.

Optionally, the joints are brazed.

Optionally, each layer incorporates a joint surface of predetermined shape to allow relative motion with an adjacent layer joint surface during braze processing.

Optionally, each joint surface incorporates an inclined portion and a conical portion.

Optionally, a braze filler for each joint incorporates graded preformed mats.

Optionally, the joints are solid state bonded.

Optionally, the solid state bonded joints are explosive bonded. Optionally, the solid state bonded joints are roll bonded.

In an example, there is provided an aerospace structure requiring a graded coefficient of thermal expansion (CTE) interface comprising:
a composite structure having
   five layers each having a predetermined CTE and selected in graded order comprising Kovar in a first layer, Alloy 42 in a second layer, Alloy 48 in a third layer, 15-5PH in a fourth layer and Inconel 718 in a fifth layer,
   weldments intermediate adjacent layers in the five layers with a first land on a first adjacent layers and a mating land on a second adjacent layer and with a smart melt blended weld providing graduated weld elements across the joint having varying CTE properties across the first and mating lands;
a first end of the composite welded to a first structural component and a second end brazed to a second structural component,

In another embodiment, there is provided a method for producing a graded coefficient of thermal expansion (CTE) interface comprising the steps of:
providing a first attachment layer having a surface for attachment to a first structural component with a first CTE
providing a second attachment layer having a second surface for attachment to a second structural component with a second CTE,
providing at least one intermediate layer having a predetermined CTE intermediate the first attachment layer and the second attachment layer;
joining the first attachment layer, at least one intermediate layer and the second attachment layer in graded order of CTE by stir blended welding to form direct joints with a wide CTE-graded stir blended weld wherein the joints are forged together by applying a spinning pin-tool and shoulder against the materials being joined.

The method may further comprise the steps of
post processing the joined layers for sizing and attachment interface details for the first and second structural components;
attaching the first structural component to the first attachment layer; and
attaching the second structural component to the second attachment layer.

The method may further comprise the steps of incorporating a first land on a first of the layers and a mating land on a second layer adjacent the first layer and creating graduated weld elements across the joint having varying CTE properties across the first and mating lands using the smart melt blended weld.

Optionally, the step of incorporating a first land on a first of the layers and a mating land on a second layer adjacent the first layer includes adjusting the thickness of the first and mating lands to produce the varying CTE properties.

Optionally, the step of joining comprises the step of brazing adjacent layers.

The method may further comprise the steps of
providing a joint surface of predetermined shape to allow relative motion with an adjacent layer joint surface during the step of brazing.

The method may further comprise the step of providing a braze filler for each joint incorporating graded preformed mats.

Optionally, the step of joining comprises solid state bonding. Optionally, the solid state bonding is explosive bonding. Optionally, the solid state bonding is roll bonding.

In another example, there is provided a method for fabricating an aerospace structure requiring a graded coefficient of thermal expansion (CTE) interface comprising the steps of:
providing a first structural component having a first CTE;
providing a second structural component having a second CTE;
providing a first attachment layer having a first end for attachment to the first structural component with a first CTE
providing a second attachment layer having a second end for attachment to the second structural component with a second CTE,
providing at least one intermediate layer having a predetermined CTE intermediate the first attachment layer and the second attachment layer;
determining a joining design for the first attachment layer, at least one intermediate layer and the second attachment layer;
joining the first attachment layer, at least one intermediate layer and the second attachment layer as a composite with a graded CTE;
final processing of the first attachment layer and second attachment layer to match size requirements for the first structural component and the second structural component;
joining the first component to the composite and joining second component to the composite.

### BRIEF DESCRIPTION OF THE DRAWINGS

The features and advantages of embodiments disclosed herein will be better understood by reference to the following detailed description when considered in connection with the accompanying drawings, wherein:
FIG. 1 is a flow chart of the generalized method presented herein;
FIG. 2 is a graph of CTE as a function of temperature for a set of exemplary alloys employed to produce typical CTE-graded layered composite structures;
FIG. 3 is an isometric view of an exemplary welded CTE-graded layered composite structure as a first embodiment;
FIGs. 4A-C are section views of joint configurations to be employed with the welded CTE-graded layered composite embodiments;
FIG. 4D is a flow chart of an exemplary method for the welded CTE-graded layered composite embodiments disclosed;
FIG. 5A is a section view of an exemplary weld on a registered butt joint showing the melt zones;
FIG. 5B is a pictorial section view of a smart weld with graduated weld elements having varying CTE properties
FIG. 5C is flow chart of supplemental steps in the method of FIG. 4D for registered butt joints using smart weld;
FIG. 6A is an isometric view of a stir weld process as employed in certain embodiments of the present invention;
FIG. 6B is a side section view of the stir weld process shown in FIG. 6A;
FIG. 7A and 7B are side section views of stir weld joint configurations before and after welding;
FIG. 7C is a side section view of a stir weld joint configuration after secondary processing;
FIG. 7D is a pictorial section view of a completed exemplary stir weld;
FIG. 8 is an isometric view of an exemplary brazed CTE-graded layered composite structure as a second embodiment;
FIGs. 9A and 9B are side section views of exemplary braze joint configurations detailed view of the braze joint surfaces of FIG. 8;
FIGs. 10A and 10B are side section views of an exemplary braze filler material mat and the resulting braze joint;
FIG. 10C is a flow chart of a method for the brazed CTE-graded layered composite embodiments disclosed;
FIG. 11A is a representation of graded CTE materials for stacking in solid state bonding processes;
FIGs. 11B-E are a schematic representation of steps in a diffusion bonding process;
FIG. 11F is a schematic representation of a hot rolling process;
FIG. 11G is a schematic representation of an explosive bonding process;
FIG. 11H is a pictorial representation of an exemplary completed solid state bonded CTE-graded layered composite billet;
FIG. 11I is a flow chart of an exemplary method for the solid state bonding CTE-graded layered composite embodiments disclosed;
FIG. 12 is a flow diagram of processing of a solid state bonded CTE-graded layered composite billet to a final net shape component;
FIG. 13A is an isometric section view of the billet of FIG. 11 H demonstrating alternative interface geometries;
FIG. 13B is an isometric section view of a first of the alternative interface geometries created from the billet of FIG. 13A;
FIG. 13C is an isometric section view of a second of the alternative interface geometries created from the billet of FIG. 13A;
FIG. 14A is a flow chart of a first exemplary process for creation of an aerospace structure employing a CTE-graded layered composite as a rocket engine injector- thruster chamber interattachment component;
FIG. 14B is an exploded view of the rocket chamber and injector components to be joined using the process of FIG. 14A;
FIG. 14C is a pictorial view of the CTE-graded layered component for use in the first example of FIG. 14B;
FIG. 14D is a process flow diagram for assembly and brazing of the CTE-graded layered component of FIG. 14C;
FIG. 14E is a detailed section view of the joints of the CTE-graded layered composite of FIG. 14C.
FIG. 14F is a pictorial view of the assembled rocket engine structure;
FIG. 15A is a flow chart of a second exemplary process for creation of an aerospace structure employing a CTE-graded layered composite as a rocket engine injector - thruster chamber interattachment component;
FIG. 15B is a detailed pictorial view of the friction stir welded and blended CTE-graded layered composite plate of the second example;
FIG 15C is a process flow of secondary processing performed to produce the CTE-graded layered component of the second example;
FIG. 16A is a flow chart of a third exemplary process for creation of an aerospace structure employing a CTE-graded layered composite as an aircraft engine - nozzle interattachment component;
FIG. 16B is an exploded view of an aircraft engine having a ceramic matrix composite exhaust nozzle to be connected to an Inconel 718 flange in the third example;
FIG. 16C is a pictorial view of the CTE-graded layered composite connector ring for use in the assembly of FIG. 16B;
FIG. 16D is a detailed section view of the joints of the CTE-graded layered component of FIG. 16C;
FIG. 16E is a pictorial view of the CTE-graded layered composite connector ring attached to the ceramic matrix composite exhaust nozzle and the final assembly in the third example;
FIG. 17A is a flow chart of a fourth exemplary process for creation of an aerospace structure employing a CTE-graded layered composite as an aircraft engine - nozzle interattachment component;
FIG. 17B is a representation of the layup of alternating thin foils of each adjacent layer material placed at the interlayer interfaces to promote local blending in the solid state bonded CTE-graded layered composite billet in the fourth example;
FIG. 18 is a flow diagram of an aerospace vehicle production and service methodology; and
FIG. 19 is a block diagram of an aircraft as exemplary of the aerospace vehicle in FIG. 18.

### DETAILED DESCRIPTION

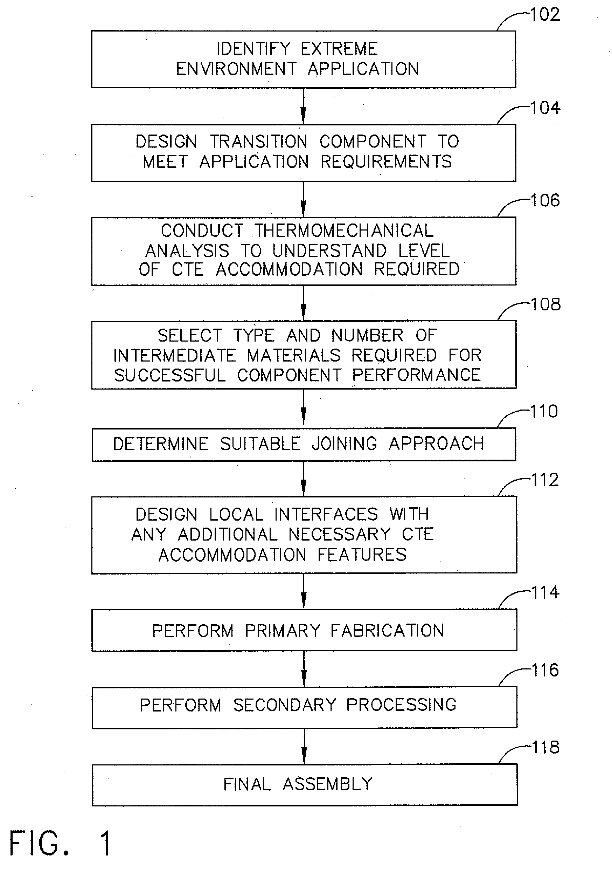

Creation of a composite structure with a graded coefficient of thermal expansion to interconnect members with vastly different CTEs employs a process as shown in FIG. 1. The application and environment are determined, step 102 (identify extreme environment application) and a transition component between the members is designed, step 104. Several specific examples of such applications are discussed in detail subsequently. A thermomechanical analysis is conducted to understand the level of CTE accommodation required, step 106. The type and number of intermediate materials required for successful component performance are then selected, step 108, for the graded CTE composite. A determination of the suitable joining method for the designed CTE-graded layered composite is made, step 110. Local interfaces with any additional necessary CTE accommodation features are designed, step 112. Primary fabrication of the CTE layer is then performed, step 114, with the selected fabrication approach. Secondary processing is performed, step 116, on the CTE-graded layered composite to create the finalized component as designed. Final assembly, step 118, is then undertaken of the created CTE-graded component and the other members.

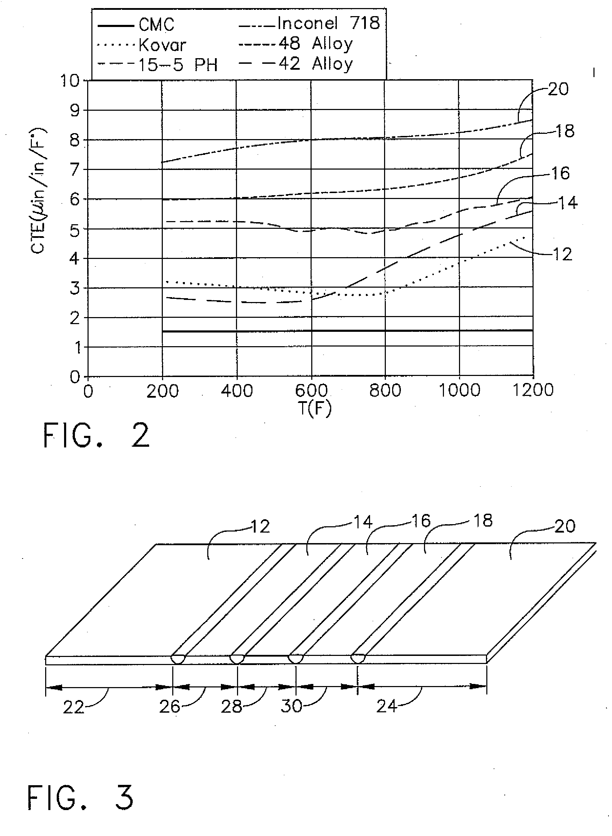

In an exemplary application where the intention is to attach a very high CTE member (e.g. one made from Inconel 718) to a very low CTE member (e.g. one made from an advanced extreme environment material such as a ceramic matrix composite) in an assembly which will be cycled between room temperature and 1200F, the graded materials could be selected from Kovar, designated element 12, for a first layer, Alloy 42, designated element 14, for a second layer, Alloy 48, designated element 16, for a third layer, 15-5PH, designated element 18, for a fourth layer and Inconel 718, designated element 20, for a fifth layer. Values of CTE as a function of temperature for the exemplary materials of the graded composite in this example are shown in FIG. 2

An exemplary joined CTE-graded layered composite employing graded material with CTE values ranging from low on one end to high on the other end is shown in FIG. 3. The composite 10 incorporates Kovar in a first layer 12, Alloy 42 in a second layer 14, Alloy 48 in a third layer 16, 15-5PH in a fourth layer 18 and Inconel 718 in a fifth layer 20. The composite shown in FIG. 3 employs greater widths 22 and 24 on the end layers to allow machining or other processes for attachment to the different CTE structures as will be described in greater detail subsequently. Widths 26, 28 and 30 of the intermediate layers are determined based on the overall desired CTE performance of the composite and can be varied for individual layers based on expansion performance of that material relative to adjacent layer materials.

For a first embodiment, layers of the composite are joined by welding using various conventional and advanced approaches, such as, without limitation, fusion welding, laser/energy beam welding, and/or friction stir welding. The process to weld the interface between each of the materials is designed to accommodate the local CTE mismatch between the layers by approaches to locally grade the weld land.

Fusion welding is a means for joining two or more materials by melting and coalescence. Gas Tungsten Arc (GTA) is a favored method for the welding of assemblies for aerospace applications. The energy for welding is provided by an electric arc established between the work and the electrode. The alloys considered exemplary for this invention (Kovar, Alloy 42, Alloy 48, 15-5PH stainless steel, and Inconel 718) are all weldable by this process and this has been previously demonstrated. Parameters for welding will vary based upon the materials and thickness being joined. Typical parameters for welding 0.063 inch thickness materials would be approximately: 70 Amperes, 10 Volts, and 6 inches per minute (IPM).

An advantage of this process is that it is robust. Parameters and joint designs can be varied or tailored as a means to promote blending of the two materials for gaining an even greater advantage in the CTE transition by minimizing any gradient in the transition.

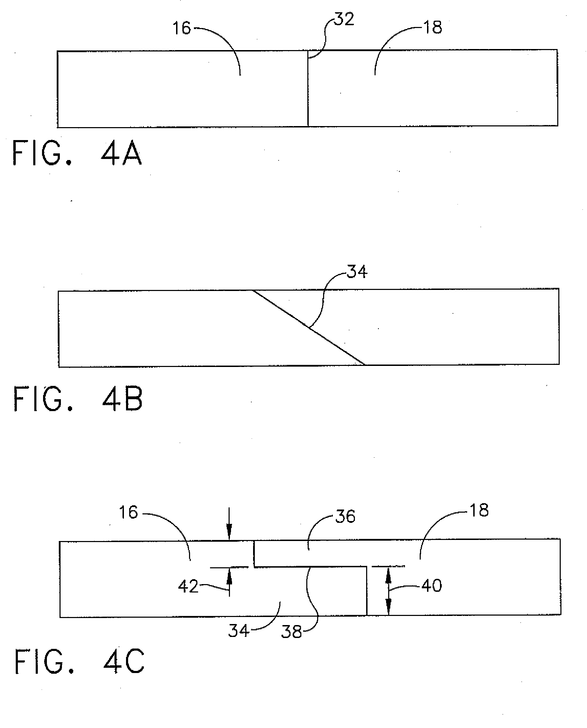

The electrode can be positioned directly above a joint or can be skewed left or right to promote the melting of one material over the other. The joint can be a simple square butt 32 as shown in FIG. 4A between the first two layers 16 and 18 however, by altering the joint to a scarf 34 as shown in FIG. 4B or registered-butt 36 as shown in FIG. 4C the benefits of the transition can be furthered.

First layer 16 is prepared with a wide weld land 34 with adjoining layer 18 prepared with a mating land 36. Length 38 and relative depths 40, 42 of the lands are determined based on the CTE differential between the adjacent layers. Welding need not be limited to one side. It is also possible to weld from both sides (which can even be done simultaneously for a circumferential joint, as an example).

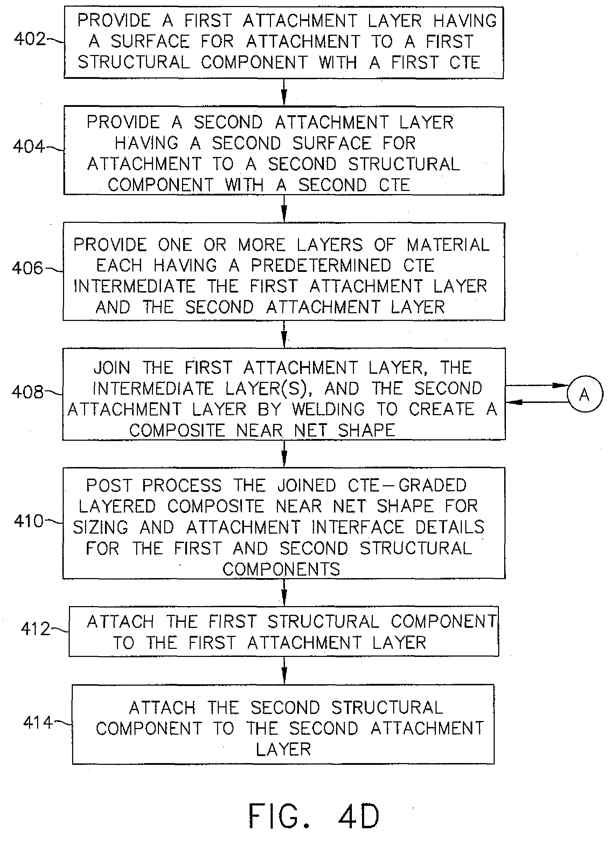

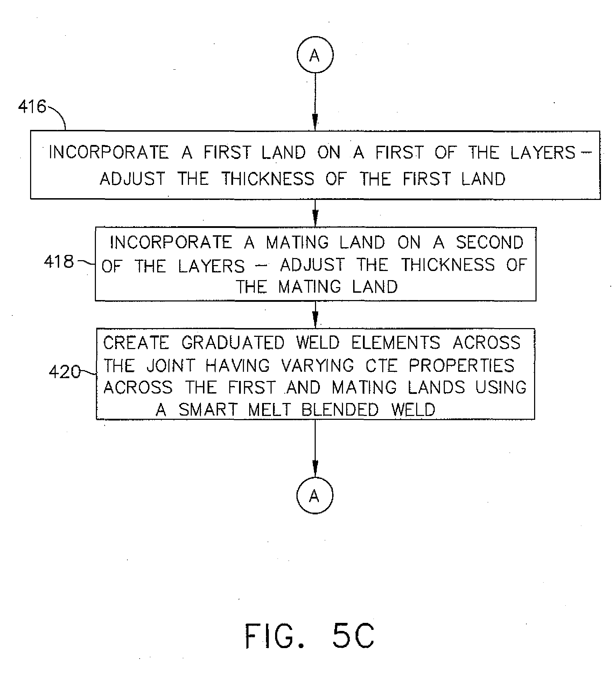

For joining of the layers in the graded CTE composite using welding, the generalized procedure of FIG. 1 is tailored as shown in FIG. 4D. The method for producing a graded coefficient of thermal expansion (CTE) interface is accomplished by providing a first attachment layer having a surface for attachment to a first structural component with a first CTE 402. A second attachment layer having a second surface for attachment to a second structural component with a second CTE is provided 404. One or more layers of material each having a predetermined CTE intermediate the first attachment layer and the second attachment layer are provided 406 and welding of the first attachment layer, the intermediate layer(s), and the second attachment layer in graded order of CTE to create a composite near net shape is accomplished 408. Subprocess A will be described in greater detail with respect to FIG. 5C. Post processing the joined layers for sizing and attachment interface details for the first and second structural components is then accomplished 410. The first structural component is then attached to the first attachment layer 412 and the second structural component is attached to the second attachment layer 414.

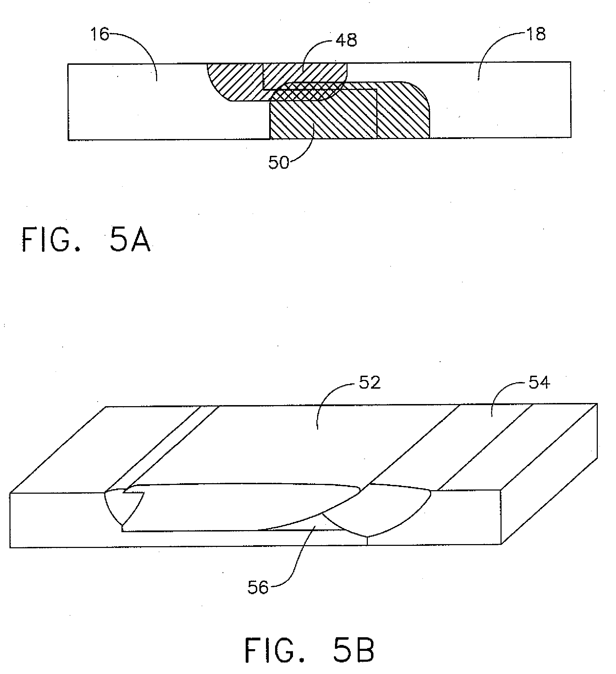

For the exemplary registered-butt joint, two electrodes 44 and 46 are employed providing melt zones 48 and 50 as shown in FIG. 5A. This process can be expanded to create a wide CTE-graded smart melt blended joint as shown in FIG. 5B. A smart weld process results in graduated weld elements 52, 54 and 56 shown having varying CTE properties. FIG. 5C provides the additional method elements of subprocess A for the welded joining procedure of FIG. 4D. A first land is incorporated on a first of the layers 416 and a mating land is incorporated on a second layer adjacent the first layer 418. The thickness of the first and mating lands is adjusted to produce the varying CTE properties. Graduated weld elements are created across the joint having varying CTE properties across the first and mating lands using a smart melt blended weld 420.

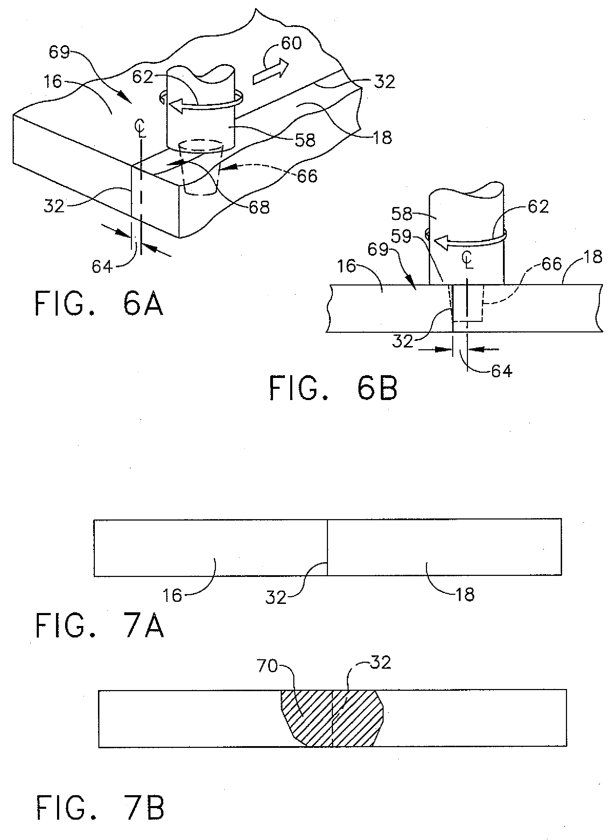

Friction stir welding is a solid state joining process in which the two materials being joined are forged together using the heat and mechanical action of a spinning pin-tool and shoulder against the materials as shown in FIGs. 6A and 6B. Layers 16 and 18 are abutted at joint 32 as shown in FIG. 7A. Tool 58 with its shoulder 59 against work piece 69 formed by layers 16 and 18 is moved in a direction of travel 60 with a direction of tool rotation 62. A lateral offset 64 determines properties of the weld based on the adjoining materials. A pin-tool 66 (also known as "Probe" in American Welding Society Nomenclature) creates the weld and the tool leaves a weld face 68 with a mixed material zone 70 as shown in FIG. 7B.

The pin-tool and shoulder spin and are translated relative to the line of joint 32. There is an advancing side (in the direction of travel 60 of pin-tool 66 and shoulder 59) and a retreating side (opposite the direction of travel). Plasticized metal is mixed in weld zone 70 creating a blend of both materials. The process found its first applications in welding of Aluminum alloys. With commercially available high temperature tools the welding of "hard alloys" (e.g. Nickel base alloys, steels, Invars, Kovars, Titanium alloys) is feasible. The control of three parameters is crucial to reliable and repeatable welds: revolutions per minute (RPM), travel speed (inches per minute) (IPM), and forging force (Lbs). Parameters vary based upon material and thickness being joined. Typical parameters for the alloys of interest in this disclosure at 0.063 inch in thickness would be approximately 700 RPM, 8 IPM, and 1800 Lbs. Materials for pin-tool 66 and shoulder 59 such as refractory metal alloys or Polycrystalline Cubic Boron Nitride (PCBN) may be employed to handle the extreme heat and tool wear in this application.

An advantage in this joining process is that the blending can be tailored by choosing the direction of travel to put one of the alloys being joined on a side, either retreating or advancing, that will optimize the transition. For the embodiment shown in FIGs. 6A and 6B, layer 16 is on the advancing side while layer 18 is on the retreating side. Also, the welding process need not occur directly on the centerline of the joint: the pin-tool can be offset transversely as shown in FIG. 6B to include more of one material or the other as a means of gaining even greater advantage in the augmentation of the transition of CTE of one of the two materials being joined.

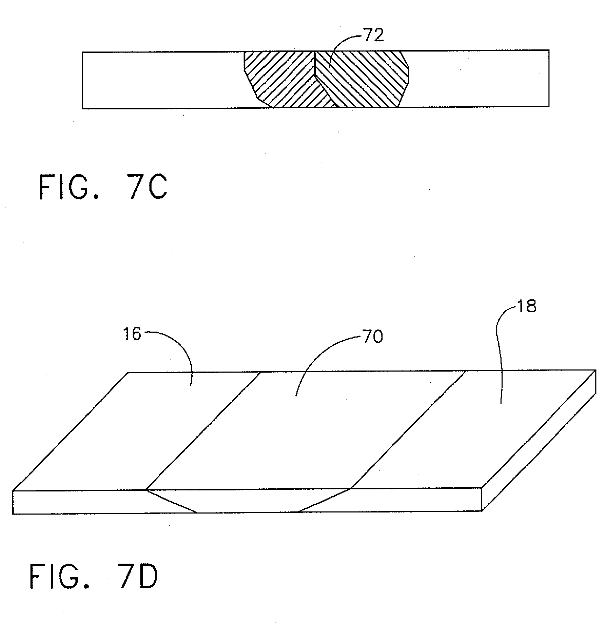

The friction stir operation need not be limited to the joining of two materials. Friction Stir Processing is an extension of the welding process wherein pin-tool 66 is plunged into a work piece 69 that has already been joined together as a means of blending the structure further with the assistance of shoulder 59 for enhanced CTE, resulting a modification of the mixed material zone 72 as shown in FIG. 7C. An exemplary completed joint 70 between layers 16 and 18 is shown in FIG. 7D.

CTE-graded composite welded structures as defined in the examples above, can be tailored to inherently accommodate for any CTE mismatch between members of an assembly that is being heated or cooled. The interface provided does not involve complicated mechanical fastening devices to allow for relative movement between members with different CTEs. Simple and conventional welding techniques can be employed, thus avoiding high costs, complex designs, and weight penalties. The processing approach allows for fabrication of the CTE-graded composite structure in various elemental geometries (e.g. rings, strips, blocks, etc.), which can subsequently be used directly to attach members with vastly different CTE to produce an assembly that can be heated or cooled without introducing significant thermal stresses or strains. Additionally, the elemental geometries can be post processed (e.g. machined, formed, etc.) to form new structures that can then be used as a CTE-graded component in an extreme environment application.

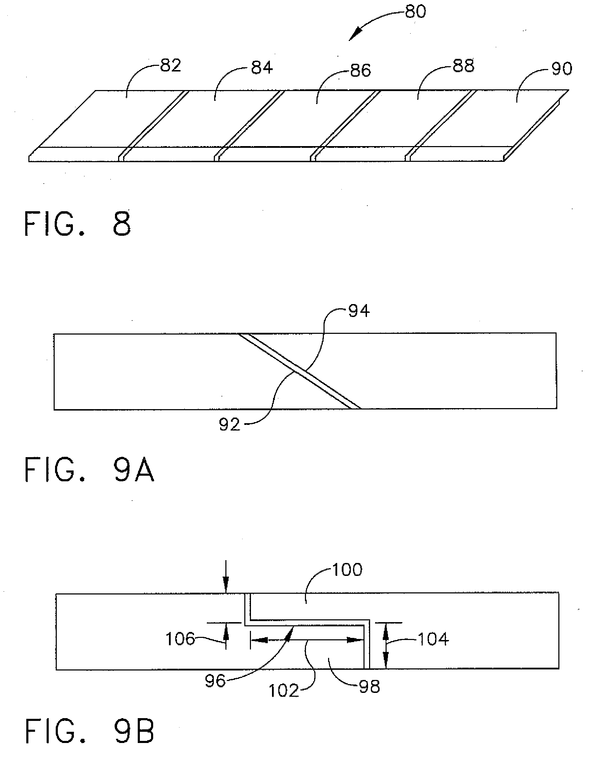

FIG. 8 shows a second embodiment for the joined composite employing a brazed structure consisting of materials with CTE values ranging from low on one end with layer 82 to high on the other end with layer 90. As with the prior embodiment, exemplary materials for the layers are shown in FIG. 3 and the composite 80 incorporates Kovar in a first layer 82, Alloy 42 in a second layer 84, Alloy 48 in a third layer 86, 15-5PH in a fourth layer 88 and Inconel 718 in a fifth layer 90.

A braze joint design intermediate each layer allows the details with different CTEs to remain in intimate contact during the braze cycle. As shown in FIG. 9A, inclined/conical mating surfaces 92, 94 allow adjacent layers to slide across each other as they are heated and the braze alloy melts. The braze joint is then cooled and the details begin to slide back across each other until the braze alloy solidifies and the sliding movement ceases.

Alternatively, a registered butt joint 96 is employed. First layer 82 is prepared with a wide land 98 with adjoining layer 84 prepared with a mating land 100. Length 102 and relative depths 104, 106 of the lands are determined based on the CTE differential between the adjacent layers.

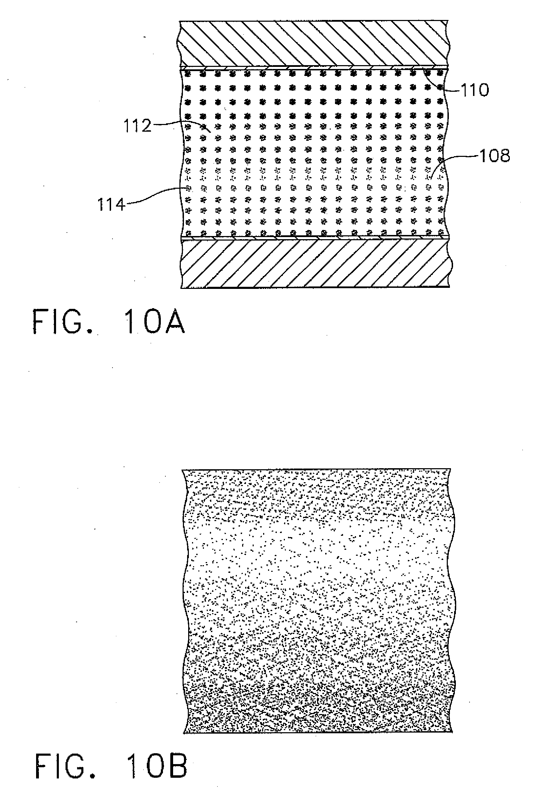

Braze filler 108 accommodates extreme local CTE mismatch by locally grading the braze joint. As exemplary, producing a wide gap CTE-graded braze joint is accomplished using graded preformed mats as shown in FIG. 10A. A matted preform incorporating an active layer 110 such as Titanium on each surface employs a polymer binder 112 suspending braze alloy 114 and active elements as well as non-melting filler as described in detail subsequently.

Brazing is a joining method in which a braze filler material with a melting point below that of the base materials is placed between two closely fitted work pieces for the purpose of joining them. In the case of the embodiments disclosed herein the braze material would be pre-placed between materials with different CTE's, the assembly would be loaded into a furnace with either a vacuum or protective atmosphere, and then heated to a suitable braze temperature at which the braze material would melt, flow, and lead to coalescence of the work pieces as shown in FIG. 10B.

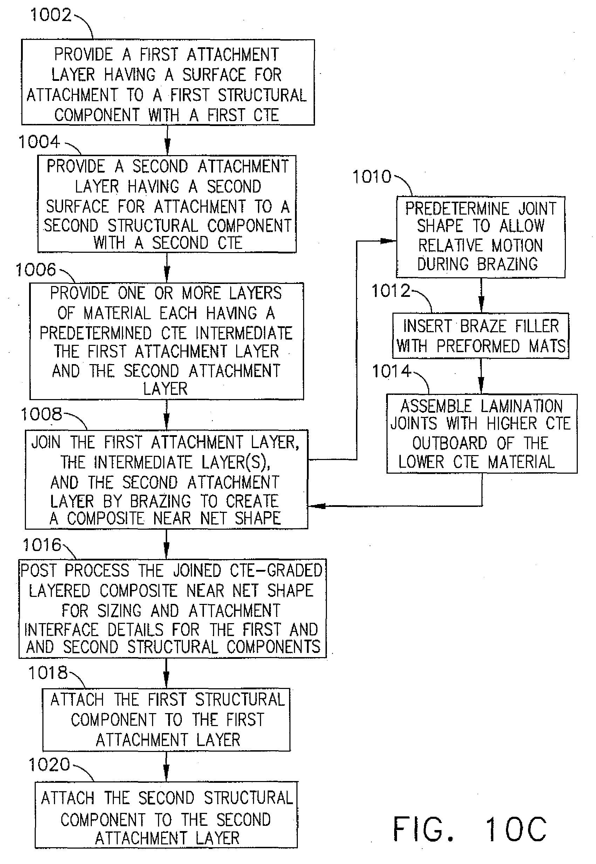

As with the welded joining, the generalized method described herein is tailored for braze joining as shown in FIG. 10C. The method for producing a graded CTE interface is accomplished by providing a first attachment layer having a surface for attachment to a first structural component with a first CTE 1002. A second attachment layer having a second surface for attachment to a second structural component with a second CTE is provided 1004 and a plurality of layers each having a predetermined CTE intermediate the first attachment layer and the second attachment layer are provided 1006. The first attachment layer, plurality of layers and the second attachment layer are brazed together in graded order of CTE 1008. Brazing is accomplished by first predetermining joint shape to allow relative motion during brazing 1010, inserting braze filler with preformed mats 1012 and assembling layer joints with higher CTE outboard of the lower CTE material 1014.

Post processing the joined layers for sizing and attachment interface details for the first and second structural components is then accomplished 1016. The first structural component is then attached to the first attachment layer 1018 and the second structural component is attached to the second attachment layer 1020.

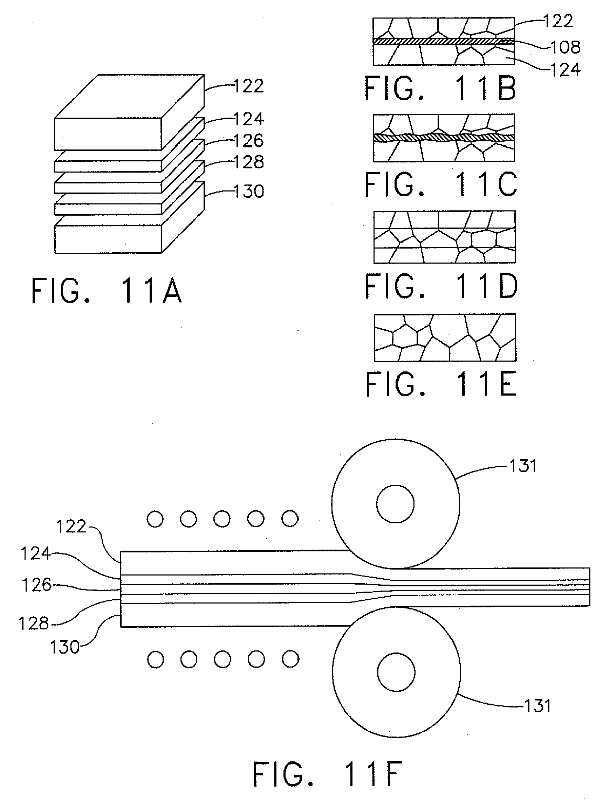

Braze filler materials for the exemplary materials in this application traditionally consist of all metallic elements. Some braze alloy systems, such as Nickel brazing, take advantage of Boron and/or Silicon to suppress the liquidus and solidus well below that of the base metals. A typical brazing operation using a commercially available Nickel base braze alloy would involve heating in a vacuum at 1850 degrees Fahrenheit for a time necessary to heat all of the assembly and tooling to the braze temperature and allow for diffusion to occur into the base materials as will be described in greater detail with respect to FIGs. 11B-E.

Newer braze materials have been created with varying percentages of inert materials such as Silicon Carbide. These inert materials can resist the high temperatures of brazing and later, the operational temperatures for applications such as jet engines or rocket motors. The mixture of the brazing materials and inert materials can be processed into a mat of varying thickness by using a binder that is volatized in the furnace at a temperature well below the brazing temperature. By varying the thickness and the percentage of inert material it is possible to tailor the CTE of the joint to suit each of the base materials being joined.

Braze joints may function best when loaded in shear as opposed to tensile stress. The scarf joint or a registered-butt joint described with respect to FIGs. 9A and 9B are most suitable for engineering applications. However, the brazement of an annular assembly can be enhanced further by assembling the base materials so that the higher CTE is outboard of the lower CTE material. This way the higher CTE material expands further during the braze cycle and then contracts on the lower CTE material creating a residual compressive stress. During operation of the assembly (well below the braze temperature) the beneficial compressive residual stress will still be apparent.

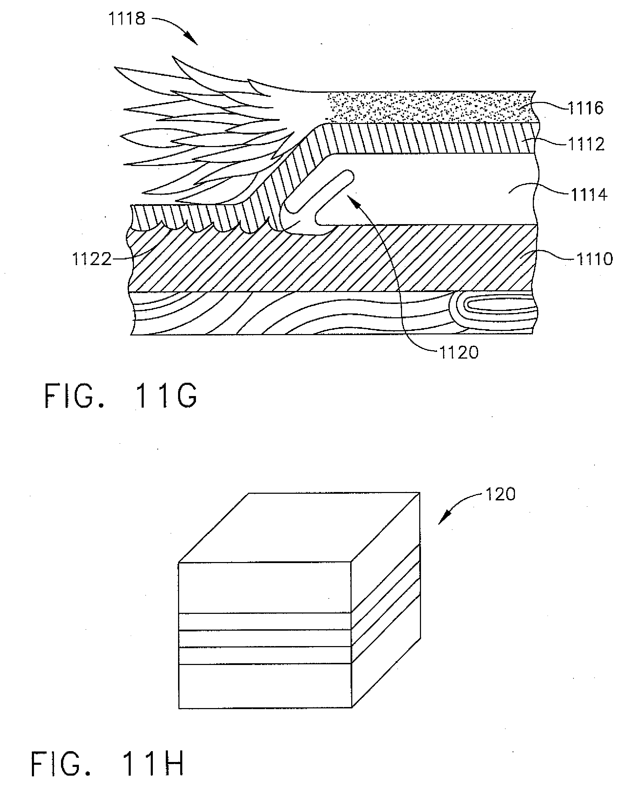

A third embodiment disclosed herein provides a joined composite billet 120 of FIG. 11H of graded materials with CTE values ranging from low on one end to high on the other end by consolidating multiple layers 122, 124, 126, 128 and 130 shown prior to consolidation in FIG. 11A which employ the materials shown in FIG. 2 and previously described for the initial embodiments. In this third exemplary embodiment, candidate materials are solid state bonded using various approaches, such as, diffusion bonding/brazing as shown in FIG. 11B-E, explosive bonding as shown in FIG. 11F, and hot rolling as shown in FIG. 11G. The resulting billet is shown in FIG. 11H.

As shown in FIGs. 11B - E diffusion bonding is accomplished by creating a braze filler material layer 108 intermediate two material layers, exemplary layers 122 and 124. The interlayer is melted as shown in FIG. 11C and then isothermally solidified into a heterogeneous bond shown in FIG. 11D. The billet is then treated to obtain a homogeneous bond as shown in FIG. 11E.

For hot rolling as shown in FIG. 11F, material layers 122, 124, 126, 128 and 130 are cut, surface treated, stacked, heated, and then compressed through rollers 131 to create a homogeneous bond.

Explosive bonding as shown in FIG. 11G is accomplished by providing a baseplate 1110 of the first material layer with a second material layer 1112 maintained at a standoff distance 1114 and overlaid with an explosive charge sheet 1116. Exploding the charge creating a wave front 1118 results in a reentrant jet 1120 between the two material layers joining them in a bond zone 1122.

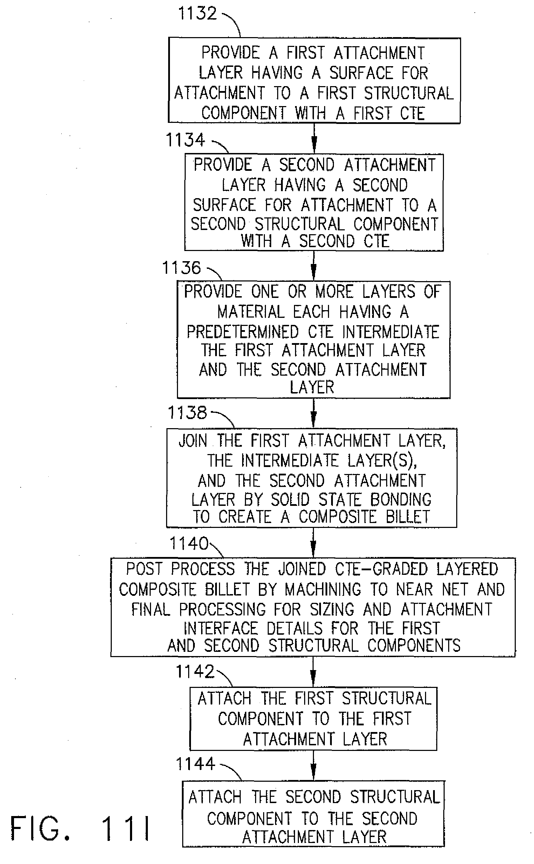

The method for producing a graded coefficient of thermal expansion (CTE) interface using solid state bonding is similar to that for welding and as shown in FIG. 11I is accomplished by providing a first attachment layer having a surface for attachment to a first structural component with a first CTE 1132. A second attachment layer having a second surface for attachment to a second structural component with a second CTE is provided 1134. One or more layers of material each having a predetermined CTE intermediate the first attachment layer and the second attachment layer are provided 1136 and the first attachment layer, the intermediate layer(s), and the second attachment layer are solid state bonded in graded order of CTE to create a composite billet 1138. Post process the joined CTE-graded layered composite billet by machining to near net and final processing for sizing and attachment interface details for the first and second structural components is accomplished 1140. The first structural component is then attached to the first attachment layer 1142 and the second structural component is attached to the second attachment layer 1144.

CTE-graded composite structures as defined in the examples above can be tailored to inherently accommodate for any CTE mismatch between members of an assembly that is being heated or cooled. The graded CTE composite alleviates the requirement for complicated mechanical fastening devices to allow for relative movement between members with different CTEs. Simple and conventional joining techniques can be employed for attaching the members, thus avoiding high costs, complex designs, and weight penalties. The processing approach allows for fabrication of the CTE-graded integrated composite structure in various elemental geometries (e.g. rings, strips, blocks, etc.), which can subsequently be used directly to attach members with vastly different CTE to produce an assembly that can be heated or cooled without introducing significant thermal stresses or strains. Additionally, the elemental geometries can be post processed (e.g. machined, formed, etc.) to form new structures that can then be used as a CTE-graded component in an extreme environment application.

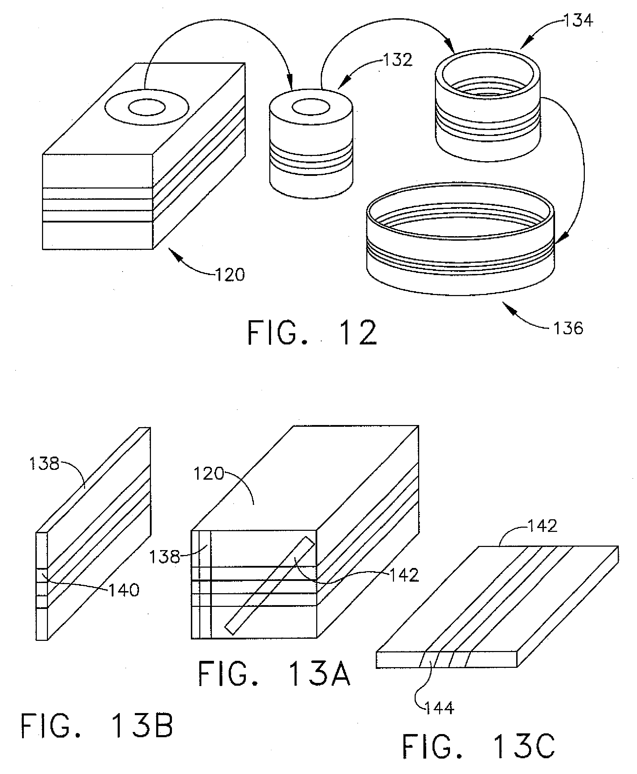

FIG. 12 demonstrates a flow process for the layered billet formed using the solid state processing described in FIGs. 11A-H. The billet 120 is formed and then machined to produce a preliminary shape 132, expanded by forging to intermediate shape 134 and then rolled to form a near net shape attachment ring 136.

Additionally, as shown in FIGs. 13A-C, various interface designs to optimize joint integrity are employed. The base integrated billet 120 shown in FIG. 13A can be machined for various mating surface configurations. An orthogonal interface between layers can be achieved as shown in FIG. 13B for a composite connection strip 138 having graded CTE layer interfaces 140 substantially perpendicular to the longitudinal axis of the strip. Alternatively as shown in FIG. 13C, the billet is machined or processed to provide composite strip 142 having inclined mating interfaces 144 between the layers to better accommodate local stresses due to CTE gradients. Widths of the intermediate layers is determined based on the overall desired CTE performance of the composite and can be varied for individual layers based on expansion performance of that material relative to adjacent layer materials.

The following examples of commonly existing attachment/sealing needs in extreme environment applications are offered as exemplary of methods for incorporating the CTE-graded layered composite structures described in the embodiments above to develop rigid, aerodynamic, light weight, simple, and inexpensive structures that can be used to attach/seal members with vastly different CTE to produce an assembly that can be heated or cooled without introducing significant thermal stresses or strains in extreme environment applications.

### Example 1 -

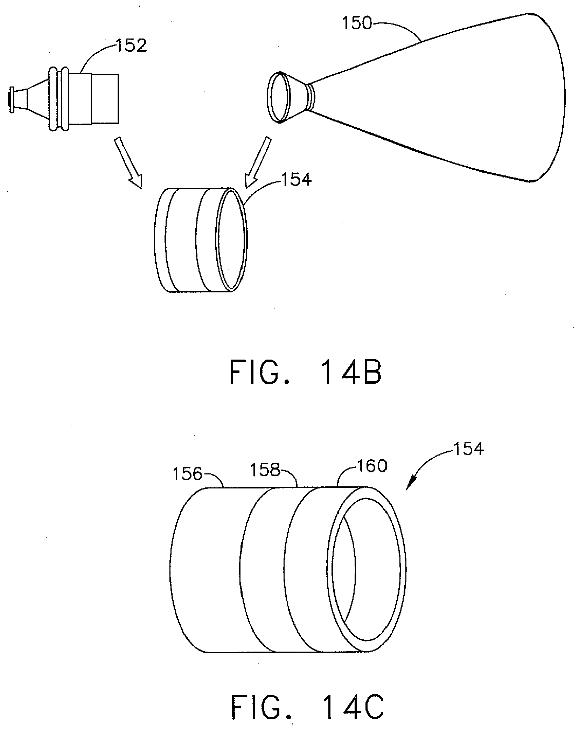

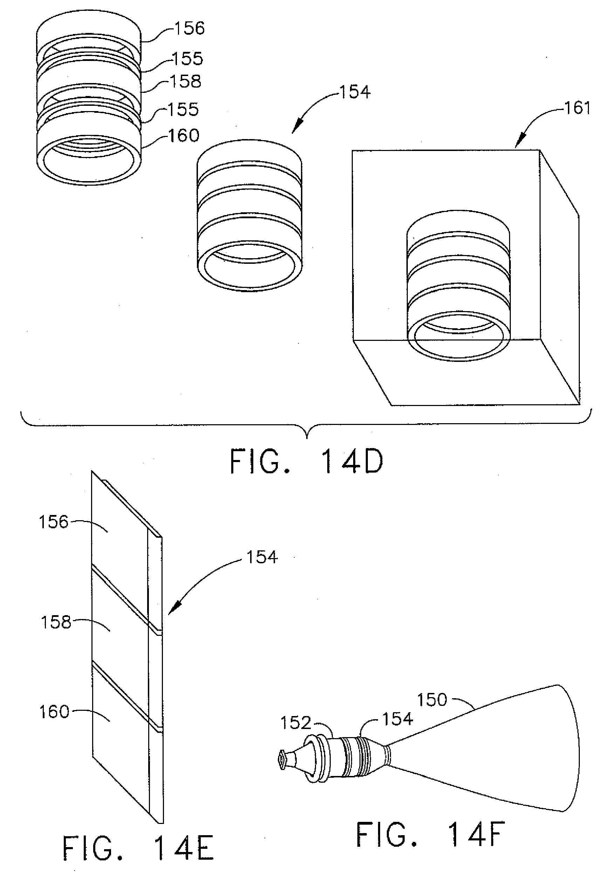

Attachment of a ceramic matrix composite thruster chamber 150 to a titanium injector 152 in a rocket engine assembly as shown in FIG. 14B.

The most common material of construction of a rocket chamber is a silicide coated Nb alloy. The operating temperature limited to 2500F (∼50% of combustion temperature) and fuel film cooling is employed to maintain this thermal limit. The use of extensive amounts of fuel film cooling may lead to undesirable results. The key to high performance is the combustion chamber material life limiting mechanisms. Another challenging issue for high performance is providing leak-free joints while attaching a combustion chamber to an injector. The combustion chamber operates at high temperatures while the injector needs to be maintained at low temperatures. Currently, Nb rocket chambers are welded directly to the injectors.

The use of ceramic matrix composite chambers can enable the design of higher performance rocket engines with reduced plume contamination and high thermal margin (much closer to maximum possible performance for common propellants, compared to current Nb chambers). These rocket engines may then operate at conventional temperatures and provide increased life for reusable spacecraft. Providing a leak-free attachment between the ceramic matrix composite combustion chamber and a titanium injector is also challenging since they cannot be directly welded and other attachment options are not practical due to the dramatic CTE mismatch. This problem can also be addressed employing the embodiments described previously.

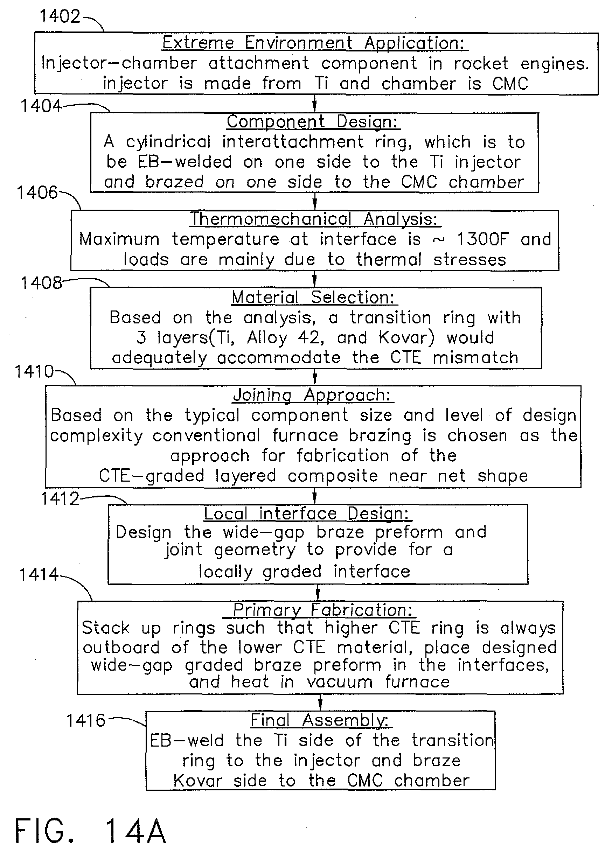

The method described generally in FIG. 1 is refined in detail for this example in FIG. 14A and describe with respect to the illustrations in FIGs. 14B, 14C and 14D. The method shown provides for assessment of the extreme environment application 1402, which for the example shown is the injector-chamber attachment component in a rocket engine with the injector fabricated from titanium and the chamber constructed from CMC. Component design 1404 is then accomplished providing a cylindrical interattchment ring which is to be EB-welded on one side to the titanium injector and brazed on the opposite side to the CMC chamber. A thermomechanical analysis is then undertaken 1406 which demonstrates a maximum temperature at the interface of approxi8mately 1300F and mechanical loads which are mainly due to thermal stresses. The temperature dependent CTE properties of each member are evaluated to determine the level of CTE mismatch. The level of heating/cooling (temperature gradients encountered during service) and the thermomechanical loading conditions in the assembly are evaluated. Material selection 1408 is then accomplished. For the exemplary application, a transition ring 154 with three layers, titanium 156, alloy 42 158 and Kovar 160 laminates as shown in FIG. 14C, adequately accommodates the CTE mismatch. A joining approach is chosen 1410 using furnace brazing for a suitable layer buildup in a near net shape component. The joining approach is chosen for the embodiment shown which typical component size and low level of design complexity. A local interface design 1412 is chosen to provide for a blended interlayer interface which, for the exemplary application, constitutes use of a wide gap braze preform to provide for a locally graded interface such as the process previously described with respect to FIGs. 10A and 10B. As shown in FIG. 14D, rings 156, 158 and 160 are stacked such that higher CTE ring is always outboard of the lower CTE material and the designed widegap graded braze preform 155 is placed in the interfaces. The primary fabrication 1414 is then accomplished for the stack up by brazing the assembled layer structure for extended duration in a high temperature vacuum furnace 161, as shown in the flow diagram of FIG. 14D. Final assembly 1416 is accomplished by EB welding the titanium side 156 of the composite transition ring 154 to the injector 150 and brazing of the Kovar side 160 to the nozzle 152 for the finished assembly as shown in FIG. 14F.

### Example 2 -

An alternative method for attachment of a ceramic matrix composite chamber 150 to a titanium injector 152 in a rocket engine assembly as shown in FIG. 14B is provided by stir welding of the layers for transition component 154.

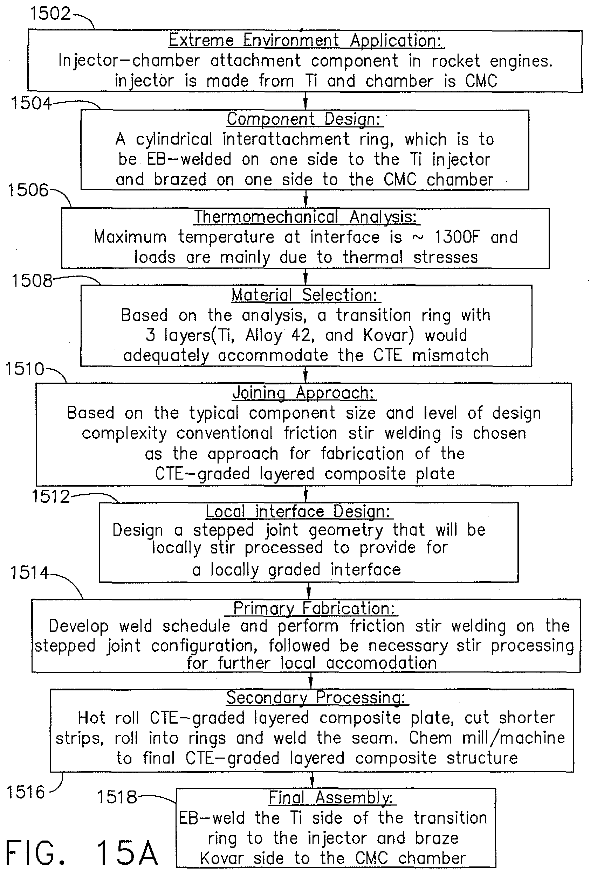

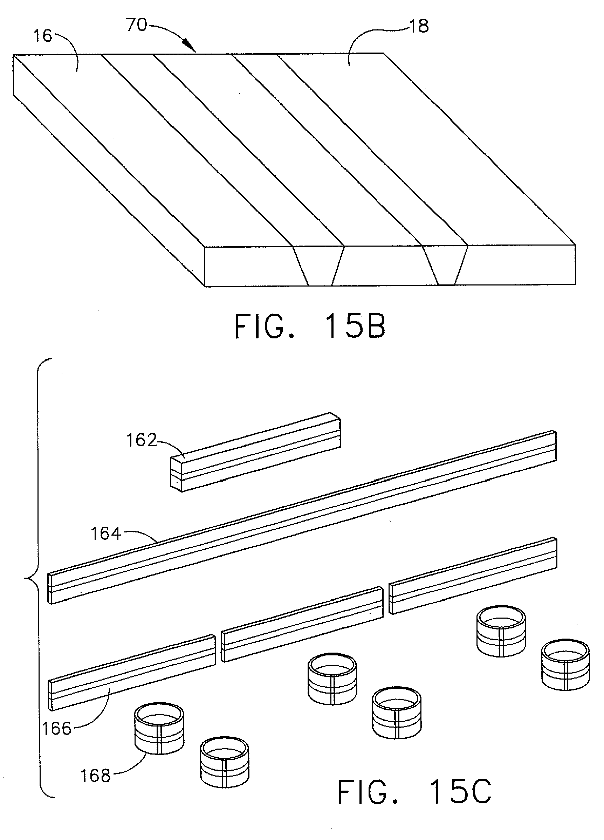

FIG. 15A describes the refinement of the generalized method for this example and is described with respect to the illustrations in FIGs. 6A and 6B and 15B. The method shown provides for assessment of the extreme environment application 1502, which for the example shown is the injector-chamber attachment component in a rocket engine with the injector fabricated from titanium and the chamber constructed from CMC. Component design 1504 is then accomplished providing a cylindrical interattchment ring which is to be EB-welded on one side to the titanium injector and brazed on the opposite side to the CMC chamber. A thermomechanical analysis is then undertaken 1506 which demonstrates a maximum temperature at the interface of approxi8mately 1300F and mechanical loads which are mainly due to thermal stresses. The temperature dependent CTE properties of each member are evaluated to determine the level of CTE mismatch. The level of heating/cooling (temperature gradients encountered during service) and the thermomechanical loading conditions in the assembly are evaluated. Material selection 1508 is then accomplished. For the exemplary application, a transition ring 154 with three layers, titanium 156, alloy 42 158 and Kovar 160 laminates as shown in FIG. 14C, adequately accommodates the CTE mismatch. A joining approach is chosen 1510 to use conventional stir welding. The joining approach is chosen for the embodiment shown with typical component size and low level of design complexity. A local interface design 1512 is chosen to provide for a blended interlayer interface which, for the exemplary application, constitutes with a stepped joint configuration, as previously described with respect to FIGs. 6A, 6B, and 7A-C. The primary fabrication 1514 is then accomplished for stir welding the assembled layer structure as shown in the FIG. 15B. Secondary processing is then accomplished 1516 as shown in FIG. 15C by hot rolling the CTE graded layered plate 162 created by the stir welding to create performs 164, cutting the preforms into shorter strips 166 followed by rolling and welding of the short strips at the seam to create rings 168 which are then chem milled to create the final composite transition rings 154. Final assembly 1518 is accomplished by EB welding the titanium side 156 of the composite transition ring 154 to the injector 150 and brazing of the Kovar side 160 to the nozzle 152 for the finished assembly as shown in FIG. 14F.

The assembled injector and ceramic chamber of FIG. 14F shows the graded composite ring 154 with the three alloy layer described.

### Example 3-

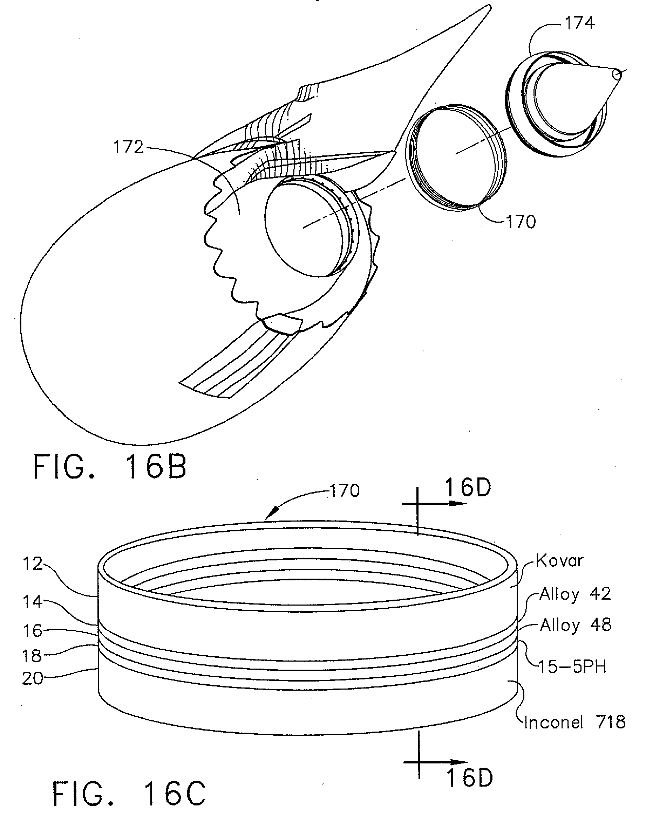

Engine-nozzle attachment component 170 in aircraft as shown in FIG. 16B wherein an engine flange (attachment interface) 172 is made from Inconel 718 and a nozzle 174 is CMC.

Aircraft engines may offer better fuel economy by running the combustor section at higher temperatures. Metallic alloys conventionally used for the exhaust systems may have an undesirably short service life at the higher temperatures. Replacing the current metallic exhaust system with ceramic matrix composites may resolve this issue and may potentially help reduce weight. However, such a ceramic matrix composite exhaust system (very low CTE) should be designed to mate to a superalloy engine interface (very high CTE). Providing a leak-free attachment between the ceramic matrix composite nozzle and a superalloy flange (e.g. made of Inconel 718) is a challenge since they cannot be directly welded and other attachment options are not practical due to the dramatic CTE mismatch. The CTE mismatch can be addressed using the embodiments described. To accomplish this, a high temperature metallic adapter ring will be required, which will incorporate features suitable for mating with the low strain-to-failure ceramic matrix composite. This interface design needs to accommodate the huge CTE mismatch between the Inconel 718 flange and the ceramic matrix composite nozzle.

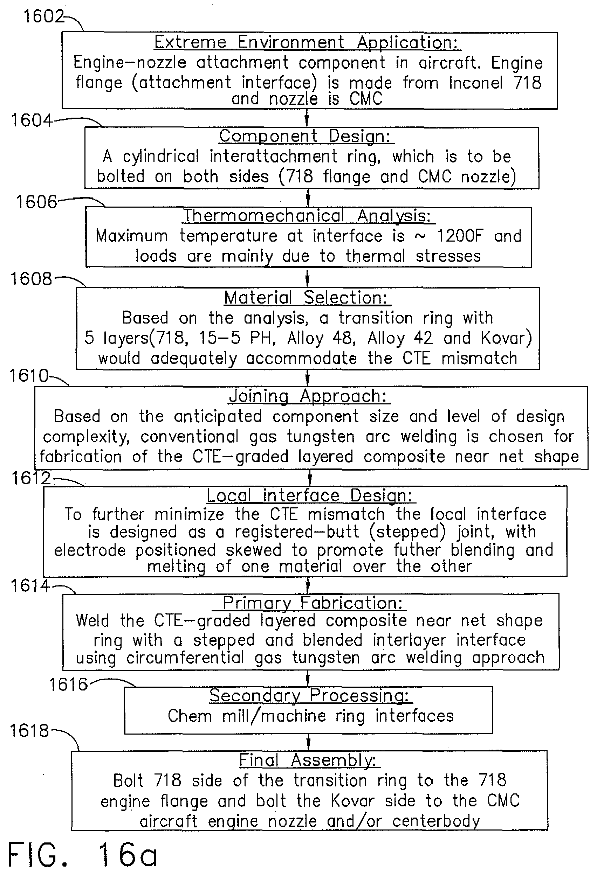

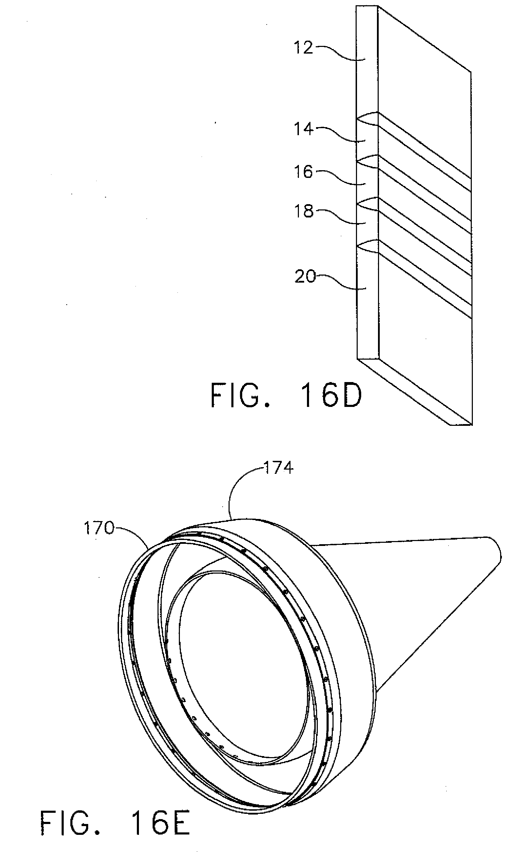

FIG. 16A describes the refinement of the generalized method for this example and is described with respect to the illustrations in FIGs. 16C, 16D and prior described FIGs. 4A-C, 5A and 5B. The method provides for determining an extreme environment application 1602 which constitutes the engine-nozzle attachment component for an aircraft wherein the engine flange is Inconel 718 and the nozzle is CMC. A component design is made 1604 which calls for a cylindrical interattachment ring which is to be bolted to the 718 flange at a first side and the CMC nozzle at the opposite side. A thermomechanical analysis is conducted 1606 which defines the maximum temperature at the interface of approximately 1200F with loads mainly due to thermal stresses. Material selection is made 1608 for the interattachment ring with a five layer laminate as shown in FIG. 16C incorporating an inconel 718 layer 20, 15-5 PH layer 18, Alloy 48 layer 16, Alloy 42 layer 13 and Kovar layer 12 with properties as previously described with respect to FIG. 2 to accommodate the CTE mismatch between the 718 flange and CMC nozzle. A fabrication approach is selected 1610 based on anticipated component size and low level of design complexity using circumferential gas tungsten arc welding to create a near net shape component. Local interface design is made 1612 to further minimize the CTE mismatch using a registered stepped butt joint with the electrode skewed to further promote blending and melting of one material over the other as previously described with respect to FIGs.5A-5C. Primary fabrication is then accomplished 1614 using the gas tungsten are welding approach as designed. A section view of the resulting joints is shown in FIG. 16D with detail of the joint as shown in FIG. 5B. Secondary processing is then conducted 1616 machining or chem milling the ring to final interface dimensions. Final assembly 1618 is then accomplished by bolting the 718 engine flange to the 718 side of the CTE-graded composite ring and bolting the CMC nozzle to the Kovar side of the ring.

The assembled ring and CMC nozzle of FIG. 16E shows the graded composite ring 170 with the five alloy layer described as bolted to the nozzle.

### Example 4-

Alternative engine-nozzle attachment component 170 using solid state boding for the arrangement shown in FIG. 15B wherein an engine flange (attachment interface) 172 is made from Inconel 718 and a nozzle 174 is CMC.

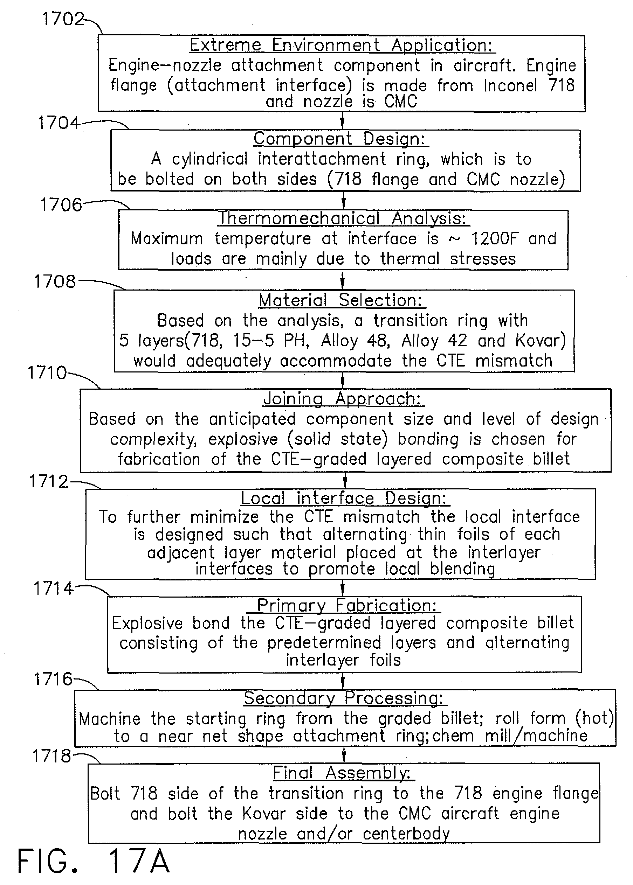

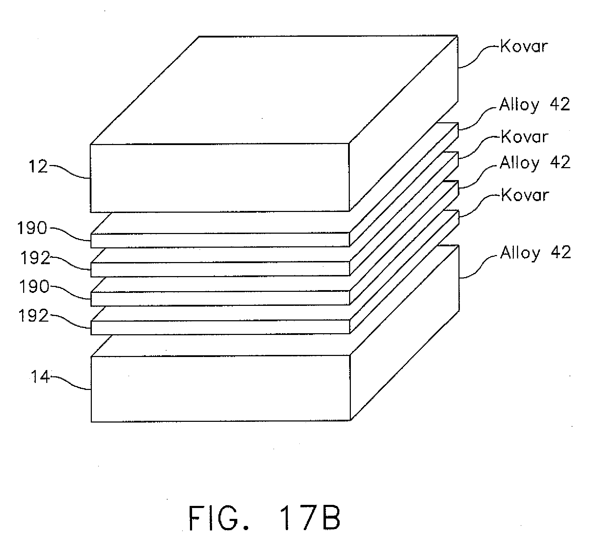

FIG. 17-A describes the refinement of the generalized method for this example and is described with respect to the illustrations in FIG. 17B and prior described FIGs. 11A-H and 12. The method provides for determining an extreme environment application 1702 which constitutes the engine-nozzle attachment component for an aircraft wherein the engine flange is Inconel 718 and the nozzle is CMC. A component design is made 1704 which calls for a cylindrical interattachment ring which is to be bolted to the 718 flange at a first side and the CMC nozzle at the opposite side. A thermomechanical analysis is conducted 1706 which defines the maximum temperature at the interface of approximately 1200F with loads mainly due to thermal stresses. Material selection is made 1708 for the interattachment ring with a five layer laminate as shown in FIG. 16C incorporating an inconel 718 layer 20, 15-5 PH layer 18, Alloy 48 layer 16, Alloy 42 layer 13 and Kovar layer 12 with properties as previously described with respect to FIG. 2 to accommodate the CTE mismatch between the 718 flange and CMC nozzle. A fabrication approach is selected 1610 based on anticipated component size and low level of design complexity, explosive bonding is chosen as the approach for fabrication. Local interface design is made 1712 to further minimize the CTE mismatch local interfaces employing alternating thin foils 190, 192 of each adjacent layer material placed at the interlayer interfaces to promote local blending as shown in FIG. 17B. Primary fabrication is then accomplished 1714 using the explosive bonding to create a composite billet with the predetermined layers and alternating interlayer foils as previously described with respect to FIG. 11F. Secondary processing is then conducted 1716 by machining a preform from the billet, hot rolling the preform to near net shape and then machining or chem milling the ring to final interface dimensions as previously described with respect to FIG. 12. Final assembly 1718 is then accomplished by bolting the 718 engine flange to the 718 side of the CTE-graded composite ring and bolting the CMC nozzle to the Kovar side of the ring..

The assembled ring and CMC nozzle of FIG. 16E shows the graded composite ring 170 with the five alloy layer described as bolted to the nozzle.

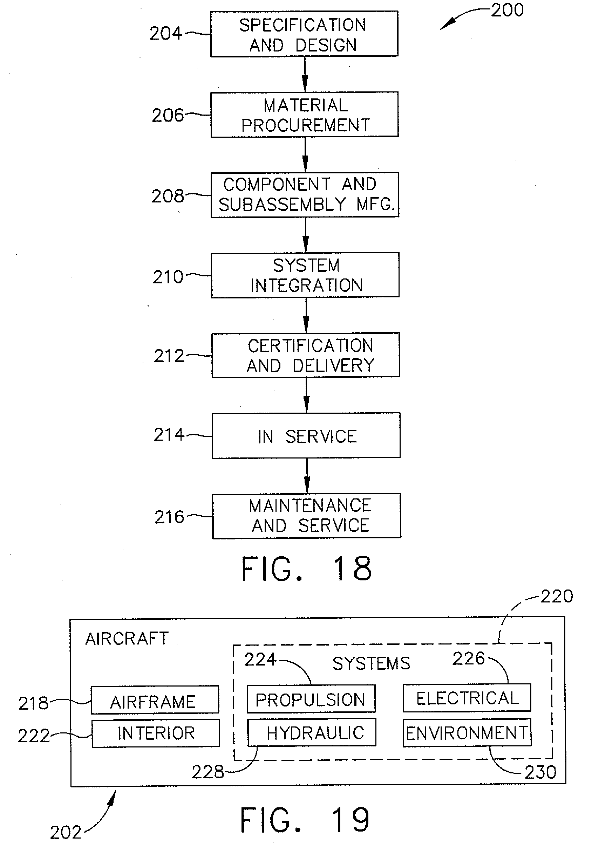

Referring FIGs. 18 and 19, embodiments of the disclosure may be described in the context of a manufacturing and service method 200 as shown in FIG. 18 and an aerospace vehicle or aircraft 202 as shown in FIG. 19. For the description of FIGs. 18 and 19 an aircraft that would incorporate an engine as described with respect to Example 3 herein is disclosed, however, the vehicle may be a rocket, spacecraft or other vehicle including aerospace, marine, combat systems and other vehicular applications. During pre-production, exemplary method 200 may include specification and design 204 of the aircraft 202 and material procurement 206. During production, component and subassembly manufacturing 208 and system integration 210 of the aircraft 202 takes place. Thereafter, the aircraft 202 may go through certification and delivery 212 in order to be placed in service 214. While in service by a customer, the aircraft 202 is scheduled for routine maintenance and service 216 (which may include modification, reconfiguration, refurbishment, and so on).

Each of the processes of method 200 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

As shown in FIG. 19, the aircraft 202 produced by exemplary method 200 may include an airframe 218 with a plurality of systems 220 and an interior 222. Examples of high-level systems 220 include one or more of a propulsion system 224, an electrical system 226, a hydraulic system 226, and an environmental system 230.

Apparatus and methods embodied herein may be employed during any one or more of the stages of the production and service method 200. For example, components or subassemblies corresponding to production process 208 may be fabricated or manufactured in a manner similar to components or subassemblies produced while the aircraft 202 is in service. Also, one or more apparatus embodiments, method embodiments, or a combination thereof may be utilized during the production stages 208 and 210, for example, by substantially expediting assembly of or reducing the cost of an aircraft 202. Similarly, one or more of apparatus embodiments, method embodiments, or a combination thereof may be utilized while the aircraft 202 is in service, for example and without limitation, for maintenance and service 216.

Having now described various embodiments of the disclosure in detail as required by the patent statutes, those skilled in the art will recognize modifications and substitutions to the specific embodiments disclosed herein. Such modifications are within the scope and intent of the present disclosure as defined in the following claims.

## Claims

1. A graded coefficient of thermal expansion (CTE) interface comprising:
a composite structure having
a first end for attachment to a structural component with a first CTE and a second end for attachment to a second structural component with a second CTE,
a plurality of layers between the first and second ends, each having a predetermined CTE, and
joints between adjacent layers in the plurality of layers, wherein the joints comprise wide CTE-graded stir blended weldments, and further wherein the joints are forged together by applying a spinning pin-tool and shoulder against the materials being joined.

2. A method for producing a graded coefficient of thermal expansion (CTE) interface comprising the steps of:
providing a first attachment layer having a surface for attachment to a first structural component with a first CTE
providing a second attachment layer having a second surface for attachment to a second structural component with a second CTE,
providing at least one intermediate layer having a predetermined CTE between the first attachment layer and the second attachment layer;
joining the first attachment layer, at least one intermediate layer and the second attachment layer in graded order of CTE by stir blended welding to form direct joints with a wide CTE-graded stir blended weld wherein the joints are forged together by applying a spinning pin-tool and shoulder against the materials being joined.

3. The method of claim 2
further comprising the steps of
post processing the joined layers for sizing and attachment interface details for the first and second structural components;
attaching the first structural component to the first attachment layer; and
attaching the second structural component to the second attachment layer.

4. The method of claim 2 wherein the stir blended welding further comprises tailoring by choosing the direction of travel of the pin-tool to put one of the layers being joined on a side, either a retreating side opposite the direction of travel or an advancing side in the direction of travel, wherein the layers being joined are alloys.

5. The method of claim 2 wherein the stir blended welding further comprises offsetting the pin-tool transversely from a centerline of the joint to include more of one of the two materials to augment the transition of CTE of one of the two materials being joined.

6. The method of claim 2 wherein the stir blended welding further comprises plunging the pin-tool into a work piece that has already been joined together as a means of blending the structure further with the assistance of the shoulder resulting in a modification of a mixed material zone for enhanced CTE.

## Patentansprüche

1. Zwischenstück mit abgestuftem Wärmeausdehnungskoeffizient (WAK), die aufweist:
eine Verbundstruktur mit
einem ersten Ende zur Befestigung an einem Bauteil mit einem ersten WAK und einem zweiten Ende zur Befestigung an einem zweiten Bauteil mit einem zweiten WAK,
einer Vielzahl von Schichten zwischen dem ersten und dem zweiten Ende, von denen jede einen vorgegebenen WAK hat, und
Verbindungen zwischen benachbarten Schichten der Vielzahl von Schichten, wobei die Verbindungen breite WAK-abgestufte Rührreib-Schweißverbindungen aufweisen, und wobei des Weiteren die Verbindungen durch Anlegen eines sich drehenden Stiftwerkzeugs und einer Schulter an die Materialien, die verbunden werden, zusammengeschmiedet werden.

2. Verfahren zum Herstellen eines Zwischenstücks mit abgestuftem Wärmeausdehnungskoeffizient (WAK), das die folgenden Schritte beinhaltet:
Bereitstellen einer ersten Befestigungsschicht, die eine Fläche zur Befestigung an einem ersten Bauteil mit einem ersten WAK hat;
Bereitstellen einer zweiten Befestigungsschicht, die eine zweite Fläche zur Befestigung an einem zweiten Bauteil mit einem zweiten WAK hat;
Bereitstellen wenigstens einer Zwischenschicht mit einem vorgegebenen WAK zwischen der ersten Befestigungsschicht und der zweiten Befestigungsschicht;
Verbinden der ersten Befestigungsschicht, wenigstens einer Zwischenschicht und der zweiten Befestigungsschicht in abgestufter Reihenfolge des WAK durch Rührreib-Schweißen, um direkte Verbindungen mit einer breiten WAK-gradierten Rührreib-Schweißung zu bilden, wobei die Verbindungen durch Anlegen eines sich drehenden Stiftwerkzeugs und einer Schulter an die Materialien, die verbunden werden, zusammengeschmiedet werden.

3. Verfahren nach Anspruch 2, das des Weiteren die folgenden Schritte beinhaltet:
Nachbearbeiten der verbundenen Schichten hinsichtlich Größe und Details der Befestigungsschnittstelle für das erste und zweite Bauteil;
Befestigen des ersten Bauteils an der ersten Befestigungsschicht; und
Befestigen des zweiten Bauteils an der zweiten Befestigungsschicht.

4. Verfahren nach Anspruch 2, wobei das Rührreib-Schweißen des Weiteren Konfektionieren durch Wählen der Bewegungsrichtung des Stiftwerkzeugs beinhaltet, um eine der Schichten, die verbunden werden, auf eine Seite zu legen, entweder eine der Bewegungsrichtung gegenüberliegende hintere Seite oder eine vordere Seite in Bewegungsrichtung, wobei die Schichten, die verbunden werden, Legierungen sind.

5. Verfahren nach Anspruch 2, wobei das Rührreib-Schweißen des Weiteren das schräge Versetzen des Stiftwerkzeugs von einer Mittellinie der Verbindung beinhaltet, um mehr von einem der beiden Materialien einzuschließen, um den Übergang des WAK eines der beiden Materialien, die verbunden werden, zu erhöhen.

6. Verfahren nach Anspruch 2, wobei das Rührreib-Schweißen das Eintauchen des Stiftwerkzeugs in ein Werkstück beinhaltet, das bereits verbunden worden ist, als Mittel, um die Struktur des Weiteren mit Hilfe der Schulter zu mischen, was zu einer Modifizierung einer gemischten Materialzone für erhöhten WAK führt.

## Revendications

1. Interface à coefficient de dilatation thermique (CTE) gradué comprenant :
une structure composite ayant
une première extrémité pour une fixation à un composant structurel avec un premier CTE et une seconde extrémité pour une fixation à un second composant structurel avec un second CTE,
une pluralité de couches entre les première et seconde extrémités, chacune ayant un CTE prédéterminé, et
des joints entre des couches adjacentes dans la pluralité de couches, les joints comprenant des assemblages soudés mélangés par malaxage à CTE gradué, et les joints étant en outre forgés ensemble par application d'un outil-broche et d'un épaulement rotatifs contre les matériaux qui sont assemblés.

2. Procédé pour produire une interface à coefficient de dilatation thermique (CTE) gradué comprenant les étapes de :
disposition d'une première couche de fixation ayant une surface pour une fixation à un premier composant structurel avec un premier CTE
disposition d'une seconde couche de fixation ayant une seconde surface pour une fixation à un second composant structurel avec un second CTE,
disposition d'au moins une couche intermédiaire ayant un CTE prédéterminé entre la première couche de fixation et la seconde couche de fixation ;
assemblage de la première couche de fixation, d'au moins une couche intermédiaire et de la seconde couche de fixation dans un ordre gradué de CTE par soudage mélangé par malaxage pour former des joints directs avec une soudure large mélangée par malaxage à CTE gradué, les joints étant forgés ensemble par application d'un un outil-broche et d'un épaulement rotatifs contre les matériaux qui sont assemblés.

3. Procédé selon la revendication 2, comprenant en outre les étapes de :
post-traitement des couches assemblées pour des détails de dimensionnement et d'interface de fixation pour les premier et second composants structurels ;
fixation du premier composant structurel à la première couche de fixation ; et
fixation du second composant structurel à la seconde couche de fixation.

4. Procédé selon la revendication 2, dans lequel le soudage mélangé par malaxage comprend en outre une personnalisation par choix de hoisissant la direction de déplacement de l'outil-broche pour mettre l'une des couches qui sont assemblées sur un côté, soit un côté de repli opposé à la direction de déplacement, soit un côté d'avance dans la direction de déplacement, les couches qui sont assemblées étant des alliages.

5. Procédé selon la revendication 2, dans lequel le soudage mélangé par malaxage comprend en outre un décalage de l'outil-broche de façon transversale par rapport à une ligne médiane du joint pour inclure plus d'un des deux matériaux pour augmenter la transition de CTE de l'un des deux matériaux qui sont assemblés.

6. Procédé selon la revendication 2, dans lequel le soudage mélangé par malaxage comprend en outre une plongée de l'outil-broche dans une pièce de travail qui a déjà été assemblée, comme moyen pour mélanger encore la structure avec l'aide de l'épaulement, résultant en une modification de zone de matériaux mélangés pour un CTE amélioré.
